(19) Europäisches Patentamt
European Patent Office
Office européen des brevets

(11) **EP 4 560 765 A1**

(12) **EUROPEAN PATENT APPLICATION**
published in accordance with Art. 153(4) EPC

(43) Date of publication:
**28.05.2025 Bulletin 2025/22**

(21) Application number: **23877731.2**

(22) Date of filing: **13.10.2023**

(51) International Patent Classification (IPC):
***H01M 10/0565*** *(2010.01)* ***H01M 10/052*** *(2010.01)*
***C08G 65/24*** *(2006.01)* ***C08L 71/02*** *(2006.01)*
***C08K 3/013*** *(2018.01)* ***C08J 5/22*** *(2006.01)*

(52) Cooperative Patent Classification (CPC):
**C08G 65/24; C08J 5/22; C08K 3/013; C08L 71/02; H01M 10/052; H01M 10/0565**

(86) International application number:
**PCT/KR2023/015790**

(87) International publication number:
**WO 2024/080808 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.10.2022 KR 20220132780**
**12.10.2023 KR 20230136067**

(71) Applicant: **LG Energy Solution, Ltd.**
**Seoul 07335 (KR)**

(72) Inventors:
- **NAM, Sung Hyun**
**Daejeon 34122 (KR)**
- **HAN, Hyea Eun**
**Daejeon 34122 (KR)**
- **KIM, Dong Kyu**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD FOR PRODUCING POLYMER SOLID ELECTROLYTE**

(57) The present disclosure relates to a method for preparing a polymer solid electrolyte. The method for preparing a polymer solid electrolyte includes (S1) preparing a polymer in which a PEO(polyethylene oxide)-based copolymer containing a crosslinkable functional group is crosslinked; and (S2) vapor-depositing a polar solvent onto the polymer prepared in step (S1), wherein the vapor deposition step can be carried out so as to satisfy a prescribed Equation, thereby adjusting the content of a polar compound in the polymer solid electrolyte:

【Figure 1】

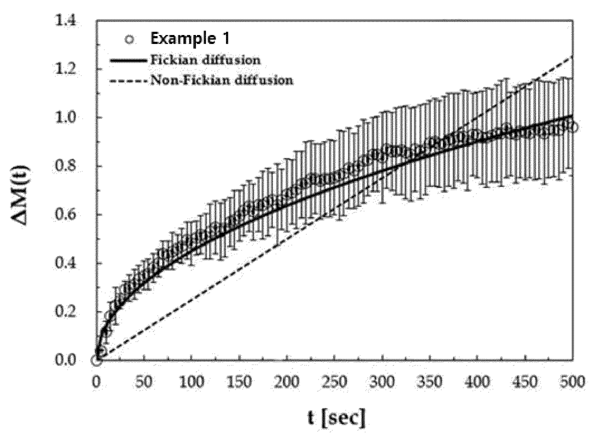


EP 4 560 765 A1

## Description

## [TECHNICAL FIELD]

Cross Citation with Related Application(s)

This application claims the benefit of Korean Patent Application No. 10-2022-0132780 filed on October 14, 2022 and Korean Patent Application No. 10-2023-0136067 filed on October 12, 2023 in the Korean Intellectual Property Office, the disclosures of which are incorporated herein by reference in their entirety.

The present disclosure relates to a method for preparing a polymer solid electrolyte.

## [BACKGROUND]

A lithium ion battery using a liquid electrolyte has a structure in which a negative electrode and a positive electrode are defined by a separator, and thus may cause a short-circuit when the separator is damaged by deformation or external impact, resulting in a risk, such as overheating or explosion. Therefore, it can be said that development of a solid electrolyte capable of ensuring safety is a very important issue in the field of lithium ion secondary batteries.

A lithium secondary battery using a solid electrolyte is advantageous in that it is enhanced in safety, prevents leakage of an electrolyte to improve the reliability of a battery, and facilitates manufacture of a thin battery. In addition, lithium metal can be used as a negative electrode to improve energy density, and therefore, it has been expected to be applied to a high-capacity secondary battery for electric vehicles in addition to a compact secondary battery, and thus has been spotlighted as a next-generation battery.

Among solid electrolytes, the composite electrolyte of polyethylene oxide (PEO) and lithium salt has the advantage of having higher ignition stability compared to conventional liquid electrolytes, but had limitations in that due to the high crystallinity possessed by polyethylene oxide (PEO), it was difficult to prepare a polymer solid electrolyte with improved ionic conductivity.In other words, the high crystallinity of the polymer impedes the chain mobility of the polymer chain, and thus, the movement of lithium ions within the polymer solid electrolyte is limited, which made it difficult to improve the ionic conductivity of polymer solid electrolytes.

Inorder to overcome the limitations of the conventional polymer solid electrolyte, attempts have been made to modify the structure of the crystalline polymer or add a separate plasticizer to the polymer to improve the mobility of the polymer chain and thus enhance the ionic conductivity of the polymer solid electrolyte. However, the solid polymer electrolyte prepared by using such structural deformation of polymers and addition of plasticizers may be difficult to improvethe ionic conductivity above the 0.1 mS/cm level.

Attempts have been made to improve the ionic conductivity by directly adding a liquid electrolyte or a solvent in a liquid state to the polymer solid electrolyte, but this can be classified as a technology for an electrolyte for a semi-solid-state battery in which a solid and a liquid coexist, rather than a pure solid electrolyte for an all-solid-state battery, safety issues due to leakage of liquid electrolyte or the like may still exist, and improvement in ionic conductivity may not be sufficient.

Therefore, in addition to the polymer solid electrolyte prepared by modifying the structure of the polymer, adding a separate plasticizer, or immersing the solid electrolyte in the liquid electrolyte, there is a need to develop a technology that can improve the ionic conductivity of the electrolyte as a pure solid electrolyte for all-solid-state batteries.

[Prior Art Literature]

[Patent Literature]

(Patent Literature 1) Japanese Unexamined Patent Publication No. 1994-124713

## [DETAILED DESCRIPTION OF THE INVENTION]

### [Technical Problem]

It is an object of the present disclosure to provide a method for preparing a polymer solid electrolyte, which not only can prepare a polymer solid electrolyte having improved ionic conductivity by including a gaseous polar compound formed by vapor-depositing a polar solvent onto a polymer and thereby vapor-depositing a very small amount of solvent,but also can control the behavior in which the polar solvent is deposited onto the polymer to thereby maximize the degree of improvement in ionic conductivity.

**[Technical Solution]**

According to one embodiment of the present disclosure, there is provided a method for preparing a polymer solid electrolyte, the method comprising the steps of:(S1) preparing a polymer in which a PEO(polyethylene oxide)-based copolymer containing a crosslinkable functional group is crosslinked; and(S2) vapor-depositing a polar solvent onto the polymer prepared in step (S1),wherein the vapor deposition step is carried out for a period of time that satisfies the following Equation 1, thereby adjusting the content of a polar compound in the polymer solid electrolyte:

<Equation 1>

$$M(t) = Kt^n$$

wherein, in Equation 1,
M(t) is the content of the polar compound contained on the surface or inside the polymer chain after the polar solvent is vapor-deposited and diffused, depending on the vapor deposition time, t is the vapor deposition time, K is the empirical rate coefficient, which is a fitting parameter for fitting the content (M(t)) of the polar compound, $0.01 < K < 0.1$, and n is the transport exponent, which is a fitting parameter for fitting the content (M(t)) of the polar compound, and is $0.5 \leq n < 0.7$.
In the preparation method, step (S1) is carried out in the presence of one or more additives selected from the group consisting of a crosslinking agent and an initiator, so that the crosslinking step can be carried out.
Moreover, in the preparation method, a lithium salt may be further added at step (S1) or before step (S1), and a ceramic compound may be further added during crosslinking in step (S1).
Meanwhile, in the preparation method, the crosslinkable functional group included in the PEO-based copolymer may be bonded to the main chain of the PEO-based copolymer via an alkylene linker or alkylene oxide linker having 0 to 10 carbon atoms (provided that an alkylene linker having 0 carbon atoms represents a single bond), and may be a functional group selected from the group consisting of a hydroxyl group, a carboxyl group, an isocyanate group, a nitro group, a cyano group, an amine group, an amide group, an epoxy group and an allyl group.
In a specific embodiment, the PEO (polyethylene oxide)-based copolymer including the crosslinkable functional group may be a copolymer containing repeating units of the following Chemical Formulas 1 to 3:

[Chemical Formula 1]

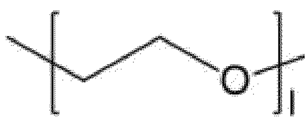

[Chemical Formula 2]

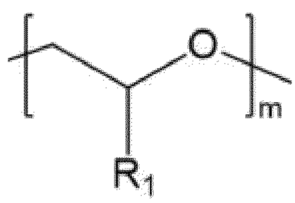

[Chemical Formula 3]

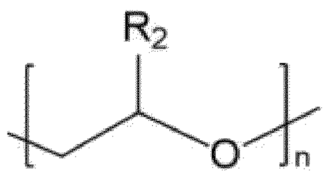

wherein, in Chemical Formulas 1 to 3, $R_1$ represents $-CH_2-O-(CH_2-CH_2-O)_k-R_3$, k is 0 to 20, $R_3$ represents an alkyl group having 1 to 5 carbon atoms,$R_2$ represents a substituent in which one or more crosslinkable functional groups selected from the group consisting of a hydroxyl group, a carboxyl group, an isocyanate group, a nitro group, a cyano group, an amine group, an amide group, an epoxy group and an allyl group are bonded to a polymer chain via an alkylene linker or alkylene oxide linker having 0 to 10 carbon atoms (provided that an alkylene linker having 0 carbon atoms represents a single bond), and l, m and n are the number of repetitions of the repeating unit, wherein l and n are each independently an integer of 1 to 1000, and m is an integer of 0 to 1000.

Meanwhile, in step (S2) of the preparation method, a vapor of the polar solvent may be deposited onto the polymer so that the content of the polar solvent is 0.1% by weight or more and less than 10% by weight based on the total weight of the polymer solid electrolyte.

In addition, the polar solvent corresponds to the polar compound deposited and contained in the polymer solid electrolyte in a gaseous state, and may include at least one selected from the group consisting of a carbonate-based solvent and a sulfonyl-based solvent. More specifically, the polar solvent may include at least one selected from the group consisting of ethyl methyl carbonate(EMC), dimethyl carbonate (DMC), diethyl carbonate (DEC), ethylene carbonate(EC), propylene carbonate (PC), vinylene carbonate (VC) and Sulfolane.

**[Advantageous Effects]**

According to the method for preparing a polymer solid electrolyte according to the present disclosure, a polar solvent (or polar compound) in a gaseous state can be included within the three-dimensional network structure of the solid electrolyte crosslinked and formed through vapor deposition, or can be bonded onto the crosslinked polymer.

As a result, a small amount of polar solvent is gradually injected into the solid electrolyte in a gaseous state, which can thus prevent gelation, delays the relaxation time of the internal polymer chain, and improve the mobility of polymer chains, thereby improving the ionic conductivity without deteriorating the mechanical properties.

Further, in the vapor deposition process, the tendency for the ionic conductivity of the polymer solid electrolyte to increase varies depending on the method in which the polar solvent is vapor-deposited onto the polymer and then diffused into the interior, and therefore, by controlling the behavior in which the vapor-deposited and adsorbed polar solvent diffuses inside the polymer based on this tendency, it is possible to maximize the effect of improving the ionic conductivity of the polymer solid electrolyte. Specifically, by controlling the content of the gaseous polar compound according to the vapor deposition time, the ionic conductivity of the polymer solid electrolyte can be more effectively achieved within a desired range.

Further, the polymer solid electrolyte can improve the mobility of polymer chains and exhibit further improved ionic conductivity, while maintaining the original structural characteristics of the polymer without deforming or destroying the material.

Moreover, in the case of a composite solid electrolyte form to which a ceramic compound is further added, it is possible to exhibit further improved ionic conductivity due to the uniform distribution of the ceramic particles. Further, the polymer solid electrolyte contains a very small amount of a gaseous polar compound, and thereby can exhibit improved ionic conductivity and mechanical properties.

**[BRIEF DESCRIPTION OF THE DRAWINGS]**

Figure 1 is a graph showing the diffusion behavior of a polar solvent within a polymer and the change in the content of the deposited polar compound according to vapor deposition time during the solvent vapor deposition process according to Example 1.

Figure 2 is a graph showing the diffusion behavior of a polar solvent within a polymer and the change in the content of the impregnated polar compound according to impregnation time during the solvent impregnation process according to Comparative Example 1.

**[DETAILED DESCRIPTION OF THE EMBODIMENTS]**

Hereinafter, specific embodiments will be described in more detail for a better understanding of the present disclosure.

Terms or words used in the specification and the appended claims should not be construed as limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

With regard to the term "bond" as used herein, that is, the conformation in which a polar compound is "bonded" to a polymer chain, e.g., a chain of a PEO-based copolymer, the term "bond" broadly refers to a conformation in which a polar compound in a gaseous state, which is a polar solvent molecule, is maintained a state fixed to a polymer chain by vapor deposition of a polar solvent. In other words, the "bond" is not limited to a specific type of physical bond, chemical bond, etc., and means including a state fixed by various bonds, including physical bonds, chemical bonds, etc., or a state simply attached and fixed, such as by adsorption, etc., or a state that is included in a three-dimensional network structure formed by crosslinking of the polymer, and is located and fixed adjacent to a polymer chain or crosslinking structure.

The term "three-dimensional network structure" as used herein is a structure that includes a three-dimensional frame and an internal space formed by the frame, wherein the frame may include a polymer chain that includes a crosslinking bond formed by the crosslinkable functional groups, e.g., a crosslinking bond between crosslinkable functional groups and/or a crosslinking bond betweencrosslinkable functional groups and a crosslinking agent. The three-dimensional network structure may also be referred to as a crosslinked structure.

In the present disclosure, the presence or inclusion of a polar compound (polar solvent) in a polymer solid electrolyte in a "gaseous state" indicates that the polar compound is deposited in a vapor state, unlike the case where the polar solvent or the electrolyte containing the same is injected in a liquid state, and the polar compound exists in a state distinct from the liquid injected electrolyte immediately after preparing the polymer solid electrolyte or during the charging and discharging process of an all-solid-state secondary battery containing the same. However, depending on the storage or operating conditions of the polymer solid electrolyte and/or secondary battery, the vapor-deposited polar compound may have a locally or temporarily liquefied state. Even in such a case, the vapor-deposited polar compound exhibits a higher mobility than the polar solvent injected in a liquid state, and exhibits a state different from the polar solvent in a liquid state, which can also be considered to exist or be included in the "gaseous state" mentioned above.

As used herein, the term "polymer solid electrolyte" includes as essential components(i) a polymer including a polyethylene oxide (PEO)-based copolymer containing a crosslinkable functional group; and a polar compound, or means (ii) a polymer solid electrolyte further includinga ceramic compound in (i) above. The polymer solid electrolyte (ii) further comprising a ceramic compound in (i) above may be referred to as a "composite solid electrolyte".

On the other hand, conventionally, in order to improve the ionic conductivity of the solid electrolyte, a solid electrolyte was immersed in or supported on a liquid electrolyte or a solvent, or the liquid electrolyte or solvent was directly injected into the solid electrolyte in a liquid state. When a liquid electrolyte or solvent is added directly to the solid electrolyte in this way, it has the effect of improving the ionic conductivity of the solid electrolyte, but this is merely an effect of increasing the ionic conductivity of the solid electrolyte based on the high ionic conductivity of the liquid itself, and the degree of improvement thereof is also not sufficient, and it is necessary to inject a considerable amount of liquid electrolyte. **In** other words, since the conduction of lithium ions is achieved by the liquid electrolyte added to the solid electrolyte rather than the inherent physical properties of the solid electrolyte, it is far from improving the physical properties of the solid electrolyte itself. Further, when a liquid electrolyte or solvent was added or injected directly into a polymer solid electrolyte in liquid form, there was a problem that the structure of the solid electrolyte collapsed due to unexpected side reactions between the polymer and the liquid phase, such as damage to the polymer chain or breaking of bonds within the polymer, or a decrease in ionic conductivity resulting therefrom.

Further, when solvent or liquid electrolyte is directly injected into the solid electrolyte, liquid molecules rapidly diffuse within the solid electrolyte to rapidly cause a relaxation phenomenon of the polymer chain and promote gelation on the surface, which may lead to a decrease in mechanical properties, and problems such as liquid leakage of liquid electrolyte may not be completely resolved.

In addition, Japanese Unexamined Patent Publication No. 1994-124713, which is a prior art, discloses a technology that vapor-deposits a solvent onto a general PEO (polyethylene oxide) polymer. In this case, there was a problem that the internal structure of the polymer was collapsed due to the lack of crosslinking structure and the ionic conductivity could not be ensured.

Thus, the present inventorshave applied a method in which a polar compound derived from a polar solvent is vapor-deposited onto a polymer solid electrolyte which contains a polymer crosslinked with a PEO (polyethylene oxide)-based copolymer modified with a crosslinkable functional group. The polymer solid electrolyte prepared in this way comprises a polymer containing a PEO (polyethylene oxide)-based copolymer containing a crosslinkable functional group; and a polar compound, wherein at least a part of the crosslinkable functional groups form a crosslinking bond with each other, so that the polymer forms a three-dimensional network structure, and wherein the polar compound in a gaseous state is contained in the three-dimensional network structure or can represent a structure bonded on a polymeric chain.

It was confirmed that this polymer solid electrolyte exhibits improved ionic conductivity even while containing a trace amount of a polar compound derived from a polar solvent in a gaseous state. This is predicted to be because the polar compound in a gaseous state affect the physical properties such as crystallinity of the PEO-based copolymer, and increases the chain mobility of the polymer chain, thereby improving the conductivity of lithium ions contained in the polymer solid electrolyte.

Next, a method for preparing a polymer solid electrolyte according to a specific embodiment will be described in detail.

## Method for preparing polymer solid electrolyte

According to one embodiment of the disclosure, there is provided a method for preparing a polymer solid electrolyte, the method comprising the steps of: (S1) preparing a polymer in which a PEO(polyethylene oxide)-based copolymer containing a crosslinkable functional group is crosslinked; and(S2) vapor-depositing a polar solvent onto the polymer prepared in step (S1),wherein the vapor deposition step is carried out for a period of time that satisfies the following Equation 1, thereby adjusting the content of a polar compound in the polymer solid electrolyte:

<Equation 1>

$$M(t) = Kt^n$$

wherein, in Equation 1, M(t) is the content of the polar compound contained on the surface or inside the polymer chain after the polar solvent is vapor-deposited and diffused, depending on the vapor deposition time, t is the vapor deposition time, K is the empirical rate coefficient, which is a fitting parameter for fitting the content (M(t)) of the polar compound, $0.01 < K < 0.1$, and n is the transport exponent, which is a fitting parameter for fitting the content (M(t)) of the polar compound, and is $0.5 \leq n < 0.7$.

In such a preparation method,the Equation 1 is a model that predicts the behavior mode (n) in which the polar solvent diffuses through the correlation between the vapor deposition time (t) of the polar solvent and the content (M(t)) of the polar compound contained or bonded in a gaseous state in the polymer solid electrolyte by vapor deposition. Since the content (M(t)) of the polar compound is related to the ionic conductivity of the polymer solid electrolyte, the vapor deposition time and the polar compound content (M(t)) resulting therefrom can be controlled through the relation of Equation 1, thereby improving the degree of improvement in ionic conductivity of the polymer solid electrolyte.

Equation 1 is defined based on the fact that the mode of behavior in which the polar solvent diffusers after being adsorbed onto the polymer is related to the vapor deposition time and the content of the polar compound, in the vapor deposition process in which the polar solvent is vapor-deposited so that a polar compound is included on the surface or inside of the polymer chain.

For example, when the polar solvent is vapor-deposited and adsorbed onto the polymer and then diffused, it exhibits Fickian diffusion behavior. Due to Fickian diffusion behavior, the polar solvent gradually diffuses inside the polymer to thereby form a uniform concentration profile. Accordingly, it is possible to adjust so that a trace amount of a polar compound is included on the surface or inside of the polymer chain, thereby improving only the mobility of the polymer chain without deforming the internal structure of the polymer. Therefore, the ionic conductivity of the polymer solid electrolyte can be improved.

On the other hand, if the polar solvent is simply injected or immersed into the polymer in a liquid state instead of vapor depositing the polar solvent, the polar solvent exhibits Non-Fickian Diffusion behavior close to Case II diffusion. Due to Case II diffusion or Non-Fickian Diffusion behavior close to Case II diffusion, the polar solvent is rapidly absorbed into the polymer, so that gelation can proceed on the polymer surface. Due to non-uniform concentration distribution inside the polymer, the polymer chain mobility decreases, so that the effect of increasing the ionic conductivity of the polymer solid electrolyte may not be significant.

The vapor deposition process can be performed to ensure that a polar compound capable of improving the ionic conductivity of the solid polymer electrolyte can be formed in a small amount onto the surface or inside of the polymer chain. Further, the vapor deposition process allows the polar solvent to be gradually diffused within the polymer, thereby forming a uniform concentration distribution of the polar solvent within the polymer, and ultimately increasing the mobility of polymer chain and thus improving the ionic conductivity.

Next, the preparation method of one embodiment will be described in more detail for each step.

In step (S1), the polymer crosslinked with a PEO (polyethylene oxide)-based copolymer containing a crosslinkable functional group can be prepared.

The crosslinking reaction in step (S1) may proceed in the presence of at least one additive selected from the group consisting of a crosslinking agent and an initiator.

Further, in order to form a polymer solid electrolyte, a lithium salt may be further added to the PEO-based copolymer having acrosslinkable functional group during the crosslinking reaction step (S1) or in a previous step thereof.

Further, in order to form the polymer solid electrolyte, a ceramic compound may be further added in step (S1).

Further, the crosslinking bond may be formed in the process of coating a polymer solution containing the PEO-based copolymer onto a substrate to form a coating film, and then drying the coating film.

Specifically, the polymer solution can be prepared by mixing the PEO-based copolymer in a solvent, and additionally, the solution can be prepared by mixing and dissolving a crosslinking agent, an initiator, and/or a lithium salt together.

The solvent is not particularly limited as long as it is a solvent that can be mixed and dissolved with the PEO-based copolymer, the crosslinking agent, the initiator and/or the lithium salt, and can be easily removed by a drying process. For example, the solvent may be acetonitrile, methanol, ethanol, tetrahydrofuran, water, isopropyl alcohol, dimethyl sulfoxide(DMSO), N-methyl-2-pyrrolidone(NMP), N,N-dimethyl formamide(DMF) or the like. Such a solvent is a solvent that serves as a reaction medium for forming a crosslinking bond, and is distinguished from polar solvents contained in liquid electrolytes, and the like, and is completely removed by drying or the like after crosslinking.

The concentration of the polymer solution can be appropriately adjusted in consideration of the extent to which the molding process for preparing the polymer solid electrolyte can proceed smoothly. Specifically, the concentration of the polymer solution may mean the concentration (w/w%) of the polymer in the polymer solution. The concentration of the polymer may be the concentration of the PEO-based copolymer. For example, the concentration of the polymer solution may be 5% by weight to 20% by weight, and specifically, it may be 5% by weight or more, 7% by weight or more, or 9% by weight or more, and 13% by weight or less, 17% by weight or less, or 20% by weight or less. If the concentration of the polymer solution is less than 5% by weight, the concentration may be too diluted, and the mechanical strength of the polymer solid electrolyte may decrease, or it may flow down when coated onto a substrate. If the concentration of the polymer solution is more than 20% by weight, it will be difficult to dissolve the lithium salt at the desired concentration in the polymer solution, the viscosity will be high, and the solubility will be low, which makes it difficult to coat the lithium salt in the form of a uniform thin film.

The substrate is not particularly limited as long as it can function as a support for the coating film. For example, the substrate may SUS (stainless use steel), polyethylene terephthalate film, polytetrafluoroethylene film, polyethylene film, polypropylene film, polybutene film, polybutadiene film, vinyl chloride copolymer film, polyurethane film, ethylene-vinyl acetate film, ethylene-propylene copolymer film, ethylene-ethyl acrylate copolymer film, ethylene-methyl acrylate copolymer film or polyimide film.

Further, the coating method is not particularly limited as long as it can form a coating film by coating the polymer solution onto the substrate. For example, the coating method may be bar coating, roll coating, spin coating, slit coating, die coating, blade coating, comma coating, slot die coating, lip coating, spray coating or solution casting.

The coating film formed on the substrate by the coating method as above can be molded into a polymer from which the residual solvent is completely removed through a drying process. The drying can be performed separately into a primary drying process and a secondary drying process in order to prevent shrinkage of the polymer due to rapid evaporation of the solvent. The first drying process can remove part of the solvent through room temperature drying, and the secondary drying process can completely remove the solvent through vacuum high-temperature drying. The high-temperature drying may be performed at a temperature of 80°C to 130°C. If the high-temperature drying temperature is less than 80°C, the residual solvent cannot be completely removed, and if the high-temperature drying temperature is more than 130°C, the polymer shrinks which makes it difficult to form uniform electrolyte membranes.

In one embodiment of the disclosure, the crosslinkable functional group may be composed of two or more types. The crosslinkable functional groups may be the same or different from each other, and preferably may be different. When the crosslinkable functional groups are different, multiple types of repeating units each containing these functional groups may be included. Further, when multiple types of crosslinkable functional groups are included, it may become easier to control the mobility and ionic conductivity of the polymer chain.

The crosslinkable functional group refers to a functional group capable of forming a crosslinking bond between crosslinkable functional groups and/or a crosslinking bond with each other through a crosslinking agent, and can be bonded with the main chain of the polymer chain in the form of a side chain.

Specifically, the crosslinkable functional group may be directly bonded to the main chain or the like of the PEO-based copolymer, or may be bonded through an alkylene or alkylene oxide linker. Thus, the crosslinkable functional group may be bonded through an alkylene linker or alkylene oxide linker having 0 to 10 carbon atoms (provided that an alkylene linker having 0 carbon atoms represents a single bond), and may be at least one selected from the group consisting of a hydroxyl group, a carboxyl group, an isocyanate group, a nitro group, a cyano group, an amine group, an amide group, an epoxy group and an allyl group.

In a more specific example, the PEO-based copolymer containing acrosslinkable functional group may be a copolymer containing repeating units of the following Chemical Formulas 1 to 3:

[Chemical Formula 1]

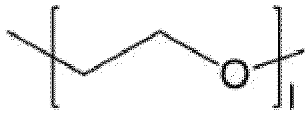

[Chemical Formula 2]

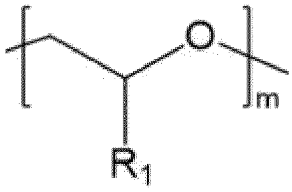

[Chemical Formula 3]

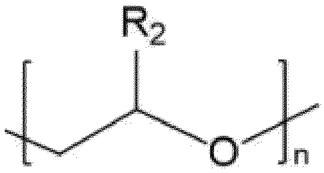

wherein, in Chemical Formulas 1 to 3, $R_1$ represents $-CH_2-O-(CH_2-CH_2-O)_k-R_3$, k is 0 to 20, and $R_3$ represents an alkyl group having 1 to 5 carbon atoms,
$R_2$ represents a substituent in which one or more crosslinkable functional groups selected from the group consisting of a hydroxyl group, a carboxyl group, an isocyanate group, a nitro group, a cyano group, an amine group, an amide group, an epoxy group and an allyl group are bonded to a polymer chain via an alkylene linker or alkylene oxide linker having 0 to 10 carbon atoms (provided that an alkylene linker having 0 carbon atoms represents a single bond), and
l, m and n are the number of repetitions of the repeating unit, wherein l and n are each independently an integer of 1 to 1000, and m is an integer of 0 to 1000.

For example, the crosslinkable functional group of $R_2$ can form a polymer having a matrix form of a three-dimensional network structure formed by the crosslinking bond. By forming a three-dimensional network structure by the crosslinking bond, the mechanical properties of the polymer solid electrolyte can be improved, and a polar compound in a gaseous state may be included or bonded within such a three-dimensional network structure to provide a polymer solid electrolyte of one embodiment having improved ionic conductivity.

Further, it is obvious that the PEO-based copolymer may include two or more types of repeating units of Chemical Formula 3 in which the $R_2$ is crosslinkable functional groups different from each other, and may also include one or more types of repeating units of Chemical Formula 2.

When l, m and n are each less than 1, it is difficult to form a polymer because the molecular weight is small, and when l, m and n are each more than 1000, the solubility during preparation of a polymer solution decreases due to an increase in viscosity, and molding for preparing a polymer solid electrolyte may become difficult. In particular, when the number of repetitions of the repeating unit of Chemical Formula 3 containing the crosslinkable functional group among l, m and n is more than 1000, the degree of crosslinking is excessively increased, the mobility of the polymer chain may decrease and the ionic conductivity of the polymer solid electrolyte may decrease.

As used herein, "hydroxy group" refers to -OH group.

As used herein, "carboxyl group" refers to -COOH group.

As used herein, "isocyanate group" refers to -N=C=O group.

As used herein, "nitro group" refers to $-NO_2$ group.

As used herein, "cyano group" refers to -CN group.

As used herein, "amide group" refers to -C(=O)N R'R", wherein R' and R" may each independently be hydrogen or a C1 to C5 alkyl group, or R' and R" together with the N atom to which they are attached may form a heterocycle having

C4 to C8 atoms in the ring structure.

As used herein, "amine group" may be selected from the group consisting of a monoalkylamine group; a monoarylamine group; a monoheteroarylamine group; a dialkylamine group; a diarylamine group; a diheteroarylamine group; an alkylarylamine group; an alkylheteroarylamine group; and an arylheteroarylamine group, and the carbon number thereof is not particularly limited, but is preferably 1 to 30. Specific examples of the amine group include a methylamine group, a dimethylamine group, an ethylamine group, a diethylamine group, a phenylamine group, a naphthylamine group, a biphenylamine group, a dibiphenylamine group, an anthracenyl amine group, a 9-methyl-anthracenylamine group, a diphenylamine group, a phenylnaphthylamine group, a ditolylamine group, a phenyltolylamine group, a triphenylamine group, a biphenylnaphthylamine group, a phenylbiphenyl amine group, a biphenylfluorenylamine group, a phenyltriphenylenylamine group, a biphenyltriphenylenylamine group, and the like, but are not limited thereto. Further, "amino group" refers to $-NH_2$.

As used herein, "allyl group" refers to $-CH_2-CH=CH_2$ group.

The weight average molecular weight (Mw) of the copolymer containing Chemical Formulas 1 to 3 may be 100,000 g/mol to 2,000,000 g/mol, and specifically, it may be 100,000 g/mol or more, 200,000 g/mol or more, or 300,000 g/mol or more, and 1,600,000 g/mol or less, 1,800,000 g/mol or less, or 2,000,000 g/mol or less. If the weight average molecular weight (Mw) of the copolymer is less than 100,000 g/mol, the mechanical properties of the polymer solid electrolyte to be prepared may not be satisfied. If the weight average molecular weight (Mw) of the copolymer is more than 2,000,000 g/mol, the solubility during preparation of the polymer solution decreases due to an increase in viscosity, and molding for preparing the polymer solid electrolyte may become difficult. Further, the ionic conductivity of the polymer solid electrolyte may decrease due to an increase in crystallinity and a decrease in chain mobility inside the polymer solid electrolyte.

In particular, when the number of repetitions of the repeating unit of Chemical Formula 3 containing a crosslinkable functional group among l, m, and n is more than 1000, the degree of crosslinking increases excessively, and the mobility of polymer chains decreases, which may lead to a decrease in the ionic conductivity of the polymer solid electrolyte.

Further, the copolymer may be a random copolymer or a block copolymer.

In a specific embodiment of the disclosure, the polymer solid electrolyte may include a crosslinking bond between crosslinkable functional groups. In addition, the polymer solid electrolyte may further include a crosslinking agent to form a crosslinking bond between the crosslinking agent and the crosslinkable functional group. For example, at least a part of the crosslinkable functional groups may form a crosslinking bond with each other via the crosslinking agent, thereby forming the above-mentioned three-dimensional network structure.

The crosslinking bond between crosslinkable functional groups may be a urethane crosslinked bond, an ester crosslinked bond, a hydrogen bond, a bond formed from a radical polymerization reaction by a vinyl group at the end of an allyl group ($-CH_2-CH=CH_2$), and the like, but is not limited to these examples.

Further, when a crosslinking agent is added in the preparation process of the polymer solid electrolyte, a crosslinking bond between the crosslinking agent and the crosslinkable functional group may be formed. The crosslinking bond may be a hydrogen bond, a bond formed by a Lewis acid-base interaction, an ionic bond, a coordination bond, or a bond formed by radical polymerization.

The crosslinking agent is not particularly limited as long as it is a polyfunctional crosslinking agent that can form a crosslinking bond with the crosslinkable functional group. For example, the crosslinking agent may be one or more multifunctional crosslinking agents, for example, a bifunctional or higher polyvalent compound, selected from the group consisting of trimethylolpropane trimethacrylate, poly(ethylene glycol) diacrylate, poly(ethylene glycol) dimethacrylate, ethylene glycol dimethylacrylate (hereinafter referred to as "EGDMA"), 1,3-diisopropenylbenzene(DIP), 1,4-diacryloyl piperazine, 2-(diethylamino)ethyl methacrylate, 2,6-bisacryloylamidopyridine, 3-(acryloyloxy)-2-hydroxypropyl methacrylate, 3,5-bis(acryloylamido)benzoic acid, 3-aminopropyltriethoxysilane, 3-isocyanatopropyltriethoxysilane, 3-methylacryloxypropyl trimethoxysilane, bis-(1-(tert-butylperoxy)-1-methylethyl)-benzene, dicumyl peroxide, dimethacrylate, divinylbenzene, ethylene glycol maleic rosinate acrylate, glycidylmethacrylate, hydroxyquinoline, i-phenyldiethoxysilane, maleic rosin glycol acrylate, methylene bisacrylamide, N,N'-1,4-phenylenediacrylamine, N,O-bisacryloyl-phenylalaninol, N,O-bismethacryloyl ethanolamine, pentaerythritol triacrylate, phenyltrimethoxy silane, tetramethoxysilane, tetramethylene, tetraethoxysilane, and triallyl isocyanurate.

Further, the crosslinking agent may be included in an amount of 1 to 30 parts by weight based on 100 parts by weight of the PEO-based copolymer containing acrosslinkable functional group. **If** the content of the crosslinking agent is less than 1 part by weight, crosslinking with the crosslinkable functional group may not be sufficiently achieved, and if the content of the crosslinking agent is more than 30 parts by weight, excessive crosslinking may occur and the mobility of the polymer chain decreases, which may lead to a decrease in ionic conductivity.

In one embodiment of the disclosure, the initiator may induce a radical polymerization reaction between the crosslinkable functional groups to form a crosslinking bond between the crosslinkable functional groups. The functional group that enables the radical polymerization reaction may be a functional group containing vinyl at the end, for example,

an allyl group.

The initiator is not particularly limited as long as it is an initiator that can induce a radical polymerization reaction between the crosslinkable functional groups. For example, the initiator may include at least one selected from the group consisting of benzoyl peroxide, azobisisobutyronitrile, lauroyl peroxide, cumene hydroperoxide, diisopropylphenyl-hydroperoxide, tert-butyl hydroperoxide, p-methane hydroperoxide and 2,2'-azobis(2-methylpropionitrile).

The initiator may be used in an amount of 0.5 to 2 parts by weight based on 100 parts by weight of the PEO-based copolymer containing acrosslinkable functional group. When the initiator is used within the above range, it can make it possible to induce a radical polymerization reaction between crosslinkable functional groups and efficiently form a crosslinking bond.

In one embodiment of the disclosure, the lithium salt is contained in a dissociated ionic state in the internal space between the polymer chains, and thus, can improve the ionic conductivity of the polymer solid electrolyte. At least a part of the cations and/or anions dissociated from the lithium salt exist in a state bonded to the polymer chain, and may exhibit mobility during charging/discharging of the battery.

The lithium salt may include at least one selected from the group consisting of $(CF_3SO_2)_2NLi$(lithium bis(trifluoromethanesulphonyl)imide, LiTFSI), $(FSO_2)_2NLi$(lithium bis(fluorosulfonyl)imide, LiFSI), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN, $LiC(CF_3SO_2)_3$, lithium chloroborane, a lithium lower aliphatic carboxylate and lithium tetraphenylborate.

Further, the lithium salt may be included in an amount of 25 to 45 parts by weight based on 100 parts by weight of the PEO-based copolymer containing the crosslinkable functional group. Specifically, it may be included in an amount of 25 parts by weight or more, 30 parts by weight or more, or 35 parts by weight or more, or 40 parts by weight or less, or 45 parts by weight or less. If the content of the lithium salt is less than 25 parts by weight, the ionic conductivity of the polymer solid electrolyte may decrease, and if the content of the lithium salt exceeds 45 parts by weight, the mechanical strength may decrease.

Meanwhile, in the preparation method of one embodiment as mentioned above, the ceramic compound has a lithium ion transfer ability to improve the conductivity of lithium ions, and preferably contains lithium atoms but does not store lithium, and has the function of transporting lithium ions, and can improve the ionic conductivity of the polymer solid electrolyte which is in the form of a composite solid electrolyte.

Further, the ceramic compound may be included in a uniformly dispersed state in the internal space of crosslinked polymer chains, for example, within the three-dimensional network structure. The ceramic compound is added together in the crosslinking process, and can be uniformly dispersed without aggregation in the internal space of the polymer chains formed by crosslinking. Such a ceramic compound can be advantageous in improving the mechanical strength and ionic conductivity of the polymer solid electrolyte due to its uniform dispersion form.

Further, the ceramic compound may be in the form of particles. Due to the morphological characteristics of particles, they can be contained in a more uniformly dispersed state within the polymer solid electrolyte. The particles of the ceramic compound may be spherical, and its diameter may be 100 nm to 1000 nm. If the diameter is less than 100 nm, the effect of non-crystallization due to the decrease in crystallinity of the polymer may be slight, and if the diameter is more than 1000 nm, dispersibility may decrease due to an increase of aggregation between particles, which may make it difficult to disperse uniformly.

The ceramic compound may be an oxide-based or phosphate-based compound, for example, an oxide-based solid electrolyte in the form of lithium metal oxide or lithium metal phosphate. More specifically, the ceramic compound may be at least one selected from the group consisting of garnet-type lithium-lanthanum-zirconium oxide(LLZO, $Li_7La_3Zr_2O_{12}$)-based compound, perovskite-type lithium-lanthanum-titanium oxide(LLTO, $Li_3xLa_{2/3-x}TiO_3$)-based compound, phosphate-based NASICON type lithium-aluminum-titanium phosphate(LATP, $Li_{1+x}Al_xTi_{2-x}(PO_4)_3$)-baSed compound, lithium-aluminum-germanium phosphate(LAGP, $Li_{1.5}Al_{0.5}Ge_{1.5}(PO_4)_3$)-based compound, lithium-silicon-titanium phosphate(LSTP, $LiSiO_2TiO_2(PO_4)_3$)-based compound, and lithium-lanthanum-zirconium-titanium oxide (LLZTO)-based compound. More preferably, at least one oxide-based solid electrolyte selected from the group consisting of lithium-lanthanum-zirconium oxide(LLZO), lithium-silicon-titanium phosphate(LSTP), lithium-lanthanum-titanium oxide(LLTO), lithium-aluminum-titanium phosphate(LATP), lithium-aluminum-germanium phosphate(LAGP), and lithium-lanthanum-zirconium-titanium oxide(LLZTO) may be used.

The oxide-based or phosphate-based oxide-based solid electrolyte generally has an ionic conductivity value of up to $10^{-4}$~ $10^{-3}$ S/cm at room temperature, and has the advantage of being stable in a high voltage region, being stable in air, and thus being easy to synthesize and handle.

Further, the ceramic compound does not easily cause combustion or ignition phenomenon even under high temperature conditions of 400°C or more, and thus is high in high-temperature stability. Therefore, when the polymer solid electrolyte contains a ceramic compound, not only the mechanical strength but also the high temperature stability and ionic conductivity of the polymer solid electrolyte can be improved.

The ceramic compound may be included in an amount of 10 parts by weight to 100 parts by weight, or 10 parts by weight to 60 parts by weight, based on 100 parts by weight of the PEO-based copolymer containing a crosslinkable

functional group.

If the ceramic compound is included in an excessively small amount, the effect of lowering the crystallinity of the polymer and making it amorphous due to the ceramic compound is reduced, so that the effect of increasing the ionic conductivity of the polymer solid electrolyte is not significant, and the mechanical properties may also not meet the expected level due to the formation of the composite.

If the ceramic compound is included in an excessively large amount, the ceramic compound is not uniformly dispersed within the polymer, and a phenomenon occurs where the ceramic compound particles clump and aggregate with each other, and finally, a polymer solid electrolyte with reduced ionic conductivity can be prepared.

Meantime, in step (S2), a polar solvent may be vapor-deposited onto the polymer prepared in step (S1) to prepare a polymer solid electrolyte in which polar solvent gas molecules are bound to the polymer chain, or a polar compound in a gaseous state is included in the internal space of the polymer chain, for example, in a three-dimensional network structure. At this time, the gas molecules of the polar solvent may correspond to the polar compound.

At this time, the vapor deposition step can be carried out for a period of time that satisfies the following Equation 1, thereby adjusting the content of a polar compound (or gaseous polar compound) in the polymer solid electrolyte:

<Equation 1>

$$M(t) = Kt^n$$

wherein, in Equation 1,

- M(t) is the content of the polar compound contained on the surface or inside the polymer chain after the polar solvent is vapor-deposited and diffused, depending on the vapor deposition time,
- t is the vapor deposition time,
- K is the empirical rate coefficient, which is a fitting parameter for fitting the content (M(t)) of the polar compound, $0.01 < K < 0.1$, and
- n is the transport exponent, which is a fitting parameter for fitting the content (M(t)) of the polar compound, and is $0.5 \leq n < 0.7$.

The M(t) means the content of the polar compound contained on the surface or inside the polymer chain after the polar solvent is vapor-deposited and diffused, depending on the vapor deposition time. The content of the polar compound increases in proportion to the vapor deposition time (t) at the beginning of the vapor deposition process, however, when a certain vapor deposition time (t) elapses, it shows a tendency to converge to a specific value while decreasing the increase amplitude. Since the adsorption and desorption behavior of polar solvents inside the polymer is similar, the M(t) can be measured using a desorption amount measuring device. For example, the M(t) can be obtained by heating at 60°C and simultaneously measuring the amount of desorption of polar solvent over time using an MS-70 analyzer (AND, Japan). Preferably, the content of the polar compound may be 0.1% by weight or more and 10% by weight or less. For example, the content of the polar compound may be 0.1% by weight or more, 1% by weight or more, 2% by weight or more, or 5% by weight or less, 6% by weight or less, 7% by weight or less, 8% by weight or less, 9% by weight or less, or less than 10% by weight. If the content of the polar compound is less than 0.1% by weight, it is difficult to induce a change in the chain conformation inside the polymer, and thus, the ionic conductivity of the polymer solid electrolyte is not improved. If the content of the polar compound is 10% by weight or more, the polymer solid electrolyte contains a large amount of liquid, thereby showing the characteristics of a semi-solid battery. In addition, there is a problem that the mechanical strength of the polymer solid electrolyte decreases due to gelation of the polymer.

The t means the vapor deposition time, which may mean the time elapsed from the point at which vapor deposition starts. The method or device for measuring the vapor deposition time is not particularly limited. For example, the vapor deposition time can be measured using various means that can ascertain the time at a particular point in time.

The K is an empirical rate coefficient and corresponds to a fitting parameter for fitting the content (M(t)) of the polar compound using Equation 1. The K is directly related to the content (M(t)) of the polar compound adsorbed by vapor deposition of the polar solvent onto the polymer, and the range of K required in the solvent vapor deposition process of the present disclosure may be $0.01 < K < 0.1$.

The n is the transport exponent, and corresponds to a fitting parameter for fitting the content (M(t)) of the polar compound using Equation 1. The n is related to the tendency and behavior of the polar solvent to vapor-deposit and diffuse within the polymer, and the range of n required for the solvent vapor deposition process of the present disclosure is $0.5 \leq n < 0.7$. When the n falls under the above range, Fickian diffusion behavior can be exhibited.

The vapor deposition may be performed by contacting the polymer with vapor of the polar solvent generated at room temperature or by heating and penetrating into the polymer. The polar compound in a gaseous state is uniformly

diffused on the surface and/or inside of the polymer by placing it at room temperature or by vapor deposition through heating in this way. **The** polar compound gas molecules may be bonded to the polymer chain, or may be included in a uniformly dispersed or diffused form in the internal space of the polymer chain.

If the polar solvent is placed at room temperature during the vapor deposition, a trace amount of a polar solvent with a low boiling point can be slowly vaporized at room temperature and penetrate into the inside of the polymer, thereby effectively inducing a change in the conformation of the polymer chains crosslinked within the polymer.

Further, when heating a polar solvent during vapor deposition, the vapor deposition rate can be improved. At this time, the heating temperature is not particularly limited as long as it is a temperature at which the polar solvent can undergo a phase change to vapor, and may be, for example, 30°C to 80°C. General PEO is melted at 60°C, but when a PEO-based copolymer modified with the crosslinkable functional group forms a crosslinked structure, it is improved in heat resistance and can withstand up to 80°C, thereby further increasing a vapor deposition rate. Further, the heating method is not limited as long as it is a method that can supply energy to generate steam. For example, a direct heating method using a burner or stove, or an indirect heating method using a heater or steam pipe, etc. can be used, but the method is not limited only to these examples.

During the heating, if the temperature is too high, there are the drawbacks that the solvent may boil at a temperature higher than the boiling point of the polar solvent, a structural change in the solvent may occur, or deformation of the polymer may be induced, and it is difficult to control the evaporation rate of the polar solvent during vapor deposition. In order to vapor deposit with a trace amount of polar solvent, it may be desirable to perform vapor deposition at a heating temperature in the appropriate range as specified above.

A polymer solid electrolyte comprising a polar compound which is a polar solvent molecule bound to the chains of crosslinked polymers via vapor deposition or contained in the internal spaces between polymer chains, as described above, can be prepared.

According to the preparation method of the polymer solid electrolyte described above, based on the correlation between the vapor deposition time defined by Equation 1 and the ionic conductivity of the polymer solid electrolyte, it is possible to maximize the degree of improvement in the ionic conductivity of the polymer solid electrolyte in the vapor deposition step (S2).

## Polymer solid electrolyte

The polymer solid electrolyte prepared according to the above-mentioned embodiments comprises: a polymer containing a PEO (polyethylene oxide)-based copolymer containing a crosslinkable functional group; and a polar compound, wherein at least a part of the crosslinkable functional groups of the copolymer form a crosslinking bond with each other, so that the polymer forms a three-dimensional network structure, and wherein the polar compound in a gaseous state is contained in the three-dimensional network structure or may have a structure bonded on the polymer chain.

Further, in the polymer solid electrolyte, at least a part of the crosslinkable functional groups may form a crosslinking bond with each other via a crosslinking agent, and the polymer solid electrolyte may further include a lithium salt.

In addition, the polymer solid electrolyte may be a composite solid electrolyte further comprising a ceramic compound.

Meanwhile, the types and contents of each component of the polymer solid electrolyte have already been described above, and therefore further description thereof will be omitted.

In a specific example, the polar compound in a gaseous state may be dispersed between polymer chains forming a three-dimensional network structure, or may have a conformation adsorbed or bonded to the surface or the inside of the polymer chains.

Such a polar compound is a gas molecule of a polar solvent used in the vapor deposition process, and may be contained in a form in which a gas molecule of the polar solvent is adsorbed to the polymer during vapor deposition, and then is diffused into the polymer chain. As a result, it can be prepared into a solid electrolyte having the above structure. The polar compound is either bonded to the polymer chain, or contained in a dispersed form in the internal space between the polymer chains, thereby capable of improving the ionic conductivity of the final prepared polymer solid electrolyte.

The above-mentioned polymer solid electrolyte does not substantially contain a solvent or electrolyte solution in a liquid state, but contains a trace amount of a polar compound included or bonded in a gaseous state by the vapor deposition. This polymer solid electrolyte can be confirmed from the fact that no liquid components are observed on the surface of the electrolyte layer, for example, when the electrolyte layer containing the same is separated from the all-solid-state battery and then observed with the naked eye, an electron microscope or the like. Unlike the same, when a polar solvent or electrolyte solution in a liquid state is injected into the solid electrolyte, a liquid component or a component showing wettability can be observed on the surface of the electrolyte layer. In addition, the polymer solid electrolyte in which the polar compound is vapor-deposited and contained in a gaseous state exhibits significantly higher ionic

conductivity than when a polar solvent or electrolyte solution in a liquid state is injected. Even through such comparison of ionic conductivity, and the like, a polymer solid electrolyte in which the polar compound is vapor-deposited and contained in a gaseous state can be confirmed.

Specifically, a polar compound bonded to the polymer chain or contained in the internal space between the polymer chains can function as a plasticizer and plasticize the polymer. The plasticized polymer may have an increased amorphous region in the inside thereof, which can improve the mobility of the polymer chain. As the mobility of the polymer chain improves, the ion hopping effect inside the polymer increases, and the ionic conductivity of the polymer solid electrolyte can be improved.

Further, the polar compound can function as an intermediate for smooth ion transfer through ion hopping. Since the affinity between lithium ions and polar compounds is stronger than the affinity between lithium ions and the ether oxygen of the PEO-based copolymer, the transfer of lithium ions may be faster and easier within the polymer to which the polar compound is adsorbed. That is, as the polar compound flows in the inside of the polymer, the cation solvation effect of lithium ions increases to improve ion mobility, and thereby, the ionic conductivity of the polymer solid electrolyte can be improved.

Further, the polar compound may include at least one selected from the group consisting of a carbonate-based compound and a sulfonyl-based compound.

Specifically, the polar compound may include at least one selected from the group consisting of ethyl methyl carbonate(EMC), dimethyl carbonate(DMC), diethyl carbonate(DEC), ethylene carbonate(EC), propylene carbonate(PC), vinylene carbonate(VC) andSulfolane, or may include a combination thereof.

The content of the polar compound may include 0.1% by weight or more and less than 10% by weight, based on the total weight of the polymer solid electrolyte. For example, the content of the polar compound may be 0.1 % by weight or more, 1% by weight or more, and 2% by weight or less, or 5% by weight or less, 6% by weight or less, 7% by weight or less, 8% by weight or less, or 9% by weight or less, or less than 10% by weight. When the content of the polar compound is less than 0.1% by weight, it is difficult to induce a change in the chain conformation inside the polymer, and thus, the ionic conductivity of the polymer solid electrolyte is not improved. When the content of the polar compound is 10% by weight or more, the polymer solid electrolyte has a large liquid content and thus has the properties of a semi-solid battery. Further, the mechanical strength of the polymer solid electrolyte may decrease due to gelation of the polymer.

## All-solid-state battery

A further embodiment of the disclosure also relates to an all-solid-state battery comprising the above solid electrolyte, wherein the all-solid-state battery includes a negative electrode, a positive electrode, and a solid electrolyte interposed between the negative electrode and the positive electrode, and the solid electrolyte is prepared according to the above-mentioned embodiments.

Specifically, the solid electrolyte includes a polymer in which a PEO (polyethylene oxide)-based copolymer containing a crosslinkable functional group is crosslinked and a polar compound in a gaseous state, the polar compound in a gaseous state is included or bonded, and optionally, the ceramic compound is uniformly dispersed, thereby improving the ionic conductivity, which can be suitable as an electrolyte for an all-solid-state battery.

Meanwhile, the positive electrode included in the all-solid-state battery includes a positive electrode active material layer, wherein the positive electrode active material layer may be formed on one surface of the positive electrode current collector.

The positive electrode active material layer includes a positive electrode active material, a binder, and a conductive material.

Further, the positive electrode active material is not particularly limited as long as it is a material capable of reversibly absorbing and desorbing lithium ions, and examples thereof may be a layered compound, such as lithium cobalt oxide, lithium nickel oxide,$Li[NixCoyMnzMv]O_2$ (where M is any one selected from the group consisting of Al, Ga, and In, or two or more elements thereof; and 0.3≤x<1.0, 0≤y, z≤0.5, 0≤v≤0.1, and x+y+z+v=1), $Li(LiaMb\text{-}a\text{-}b'M'b')O_{2\text{-}c}A_c$ (where 0≤a≤0.2, 0.6≤b≤1, 0≤b'≤0.2, and 0≤c≤0.2; M includes Mn and at least one selected from the group consisting of Ni, Co, Fe, Cr, V, Cu, Zn, and Ti; M' is at least one selected from the group consisting of Al, Mg, and B; and A is at least one selected from the group consisting of P, F, S, and N), or a compound substituted with at least one transition metal; lithium manganese oxides such as the chemical formula $Li_{1+y}Mn_{2-y}O_4$ (where y ranges from 0 to 0.33), $LiMnO_3$, $LiMn_2O_3$, and $LiMnO_2$; lithium copper oxide ($Li_2CuO_2$); vanadium oxides such as $LiV_3O_8$, $LiFe_3O_4$, $V_2O_5$, and $Cu_2V_2O_7$; Ni-site type lithium nickel oxide expressed by the chemical formula $LiNi_{1-y}MyO_2$ (where M is Co, Mn, Al, Cu, Fe, Mg, B, or Ga, and y ranges from 0.01 to 0.3); lithium manganese complex oxide expressed by the chemical formula $LiMn_{2-y}M_yO_2$ (where M is Co, Ni, Fe, Cr, Zn, or Ta, and y ranges from 0.01 to 0.1) or $Li_2Mn_3MO_8$ (where M is Fe, Co, Ni, Cu, or Zn); $LiMn_2O_4$ having a part of Li being substituted with alkaline earth metal ions; a disulfide compound; and a complex oxide formed of $Fe_2(MoO_4)_3$, but are not limited thereto.

Further, the positive electrode active material may be included in an amount of 40 to 80% by weight based on the

total weight of the positive electrode active material layer. Specifically, the content of the positive electrode active material may be 40% by weight or more or 50% by weight or more, and 70% by weight or less or 80% by weight or less. If the content of the positive electrode active material is less than 40% by weight, the connectivity and electrical properties between positive electrode active materials may be insufficient, and if the content of the positive electrode active material is more than 80% by weight, the mass transfer resistance may increase.

The binder is a component assisting in binding between the positive electrode active material and the conductive material, and in binding with the current collector. The binder may include at least one selected from the group consisting of styrene-butadiene rubber, acrylated styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepicchlorohydrin, polyphosphazene,polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethyl cellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride and poly(vinylidene fluoride)-hexafluoropropene. Preferably, the binder may include at least one selected from the group consisting of styrene-butadiene rubber, polytetrafluoroethylene, carboxymethylcellulose, polyacrylic acid, lithium polyacrylate and polyvinylidene fluoride.

Further, the binder may be included in an amount of 1% by weight to 30% by weight based on the total weight of the positive electrode active material layer. Specifically, the content of the binder may be 1% by weight or more or 3% by weight or more, and 15% by weight or less or 30% by weight or less. **If** the content of the binder is less than 1% by weight, the adhesion between the positive electrode active material and the positive electrode current collector may decrease, and if the content of the binder is more than 30% by weight, the adhesion is improved, but the content of the positive electrode active material is reduced accordingly, which may lower battery capacity.

Further, the conductive material is not particularly limited as long as it prevents side reactions in the internal environment of the all-solid-state battery and does not cause chemical changes in the battery but has excellent electrical conductivity. The conductive material may typically be graphite or electrically conductive carbon, and may be, for example, but is not limited to, one selected from the group consisting of graphite such as natural graphite or artificial graphite; carbon black such as carbon black, acetylene black, Ketjen black, Denka black, thermal black, channel black, furnace black, lamp black, and summer black; carbon-based materials whose crystal structure is graphene or graphite; electrically conductive fibers such as carbon fibers and metal fibers; carbon fluoride; metal powders such as aluminum and nickel powder; electrically conductive whiskers such as zinc oxide and potassium titanate; electrically conductive oxides such as titanium oxide; electrically conductive polymers such as polyphenylene derivatives; and a mixture of two or more thereof.

The conductive material may typically be included in an amount of 0.5% to 30% by weight based on the total weight of the positive electrode active material layer. Specifically, the content of the conductive material may be 0.5% by weight or more or 1% by weight or more, and 20% by weight or less, or 30% by weight or less. If the content of the conductive material is too low, that is, less than 0.5% by weight, it is difficult to obtain an effect on the improvement of the electrical conductivity, or the electrochemical characteristics of the battery may be deteriorated. **If** the content of the conductive material is too high, that is, more than 30% by weight, the amount of positive electrode active material is relatively small and thus capacity and energy density may be lowered. The method of incorporating the conductive material into the positive electrode is not particularly limited, and conventional methods known in the related art such as coating on the positive electrode active material can be used.

Further, the positive electrode current collector supports the positive electrode active material layer and plays the role of transmitting electrons between the external conductor wire and the positive electrode active material layer.

The positive electrode current collector is not particularly limited so long as it does not cause chemical changes in the all-solid-state battery and has high conductivity. For example, the positive electrode current collector may be made of copper, stainless steel, aluminum, nickel, titanium, palladium, fired carbon, copper or stainless steel that is surface-treated with one of carbon, nickel, titanium, silver, or the like, an aluminum-cadmium alloy, or the like.

The positive electrode current collector may have a fine protrusion and depression structure on its surface or may adopt a three-dimensional porous structure in order to improve bonding strength with the positive electrode active material layer. Thereby, the positive electrode current collector may be used in any of various forms including a film, a sheet, a foil, a mesh, a net, a porous body, a foaming body, and a non-woven fabric structure.

The positive electrode as described above can be prepared according to conventional methods. Specifically, the positive electrode can be prepared by a process in which a composition for forming a positive electrode active material layer, which is prepared by mixing a positive electrode active material, a conductive material, and a binder in an organic solvent, is coated and dried on a positive electrode current collector, and optionally, compression molding is performed on the current collector to improve the electrode density. At this time, as the organic solvent, a solvent that can uniformly disperse the positive electrode active material, binder, and conductive material, and that evaporates easily, is preferably

used. Specifically, acetonitrile, methanol, ethanol, tetrahydrofuran, water, isopropyl alcohol, dimethyl sulfoxide(DMSO), N-methyl-2-pyrrolidone(NMP), and the like can be mentioned.

On the other hand, the negative electrode contained in the all-solid-state battery includes a negative electrode active material layer, and the negative electrode active material layer may be formed on one surface of the negative electrode current collector.

The negative electrode active material may include a material capable of reversible intercalation and deintercalation of lithium ($Li^+$), a material that can react with lithium ions to reversibly form a lithium-containing compound, lithium metal or lithium alloy.

The material capable of reversible intercalation and deintercalation of lithium ion ($Li^+$) may be, for example, a crystalline carbon, an amorphous carbon, or a mixture thereof. The material that can react with lithium ions ($Li^+$) to reversibly form a lithium-containing compound may be, for example, tin oxide, titanium nitrate, or silicon. The lithium alloy may be, for example, an alloy of lithium (Li) and a metal selected from the group consisting of and sodium(Na), potassium(K), rubidium(Rb), cesium(Cs), francium(Fr), beryllium(Be), magnesium(Mg), calcium(Ca), strontium (Sr), barium (Ba), radium(Ra), aluminum(Al) and tin(Sn).

Preferably, the negative electrode active material may be lithium metal, and specifically, may be in the form of a lithium metal thin film or lithium metal powder.

The negative electrode active material may be included in an amount of 40 to 80% by weight based on the total weight of the negative electrode active material layer. Specifically, the content of the negative electrode active material may be 40% by weight or more or 50% by weight or more, and 70% by weight or less or 80% by weight or less. If the content of the negative electrode active material is less than 40% by weight, the electrical characteristics may be not sufficient, and if the content of the negative electrode active material is more than 80% by weight, the mass transfer resistance may increase.

Further, the binder is the same as described above for the positive electrode active material layer.

Further, the conductive material is the same as described above for the positive electrode active material layer.

Further, the negative electrode current collector is not particularly limited so long as it does not cause chemical changes in the corresponding battery and has conductivity. For example, the negative electrode current collector may be made of copper, stainless steel, aluminum, nickel, titanium, fired carbon, copper or stainless steel that is surface-treated with one of carbon, nickel, titanium, silver, or the like, an aluminum-cadmium alloy, or the like. Further, similar to the positive electrode current collector, the negative electrode current collector may be used in various forms such as a film, a sheet, a foil, a net, a porous body, a foaming body, and a non-woven fabric structure, which fine protrusions and depressions are formed on a surface thereof.

**The** preparation method of the negative electrode is not particularly limited, and it can be prepared by forming a negative electrode active material layer on a negative electrode current collector using a layer or film forming method commonly used in the art. For example, methods such as compression, coating, and deposition can be used. Further, the negative electrode of the present disclosure also includes a case in which a battery is assembled in a state where a lithium thin film does not exist on the negative electrode current collector, and then a metallic lithium thin film is formed on a metal plate through initial charging.

According to still another embodiment, there are provided a battery module including the all-solid state battery as a unit cell, a battery pack including the battery module, and a device including the battery pack as a power source.

Herein, particular examples of the device may include, but are not limited to: power tools driven by an electric motor; electric cars, including electric vehicles(EV), hybrid electric vehicles(HEV), plug-in hybrid electric vehicles(PHEV), or the like; electric carts, including electric bikes (E-bikes) and electric scooters (E-scooters); electric golf carts; electric power storage systems; or the like.

Preferred examples will be presented hereinafter so that the present disclosure can be understood with ease. However, the following examples are for illustrative purposes only and the scope of the invention is not limited thereto.

In the following Examples and Comparative Examples, when preparing a polymer solid electrolyte and a composite solid electrolyte, Examples 1 and 2 were carried out by applying a "solvent vapor deposition method" in which a polar solvent was vapor-deposited, and Comparative Examples 1 and 2 were carried out by applying a "solvent impregnation method" in which the sample was impregnated with a polar solvent.

In addition, the solid electrolytes prepared in the following Examples and Comparative Examples all belong to the category of the polymer solid electrolyte, but in Example 2 and Comparative Example 2, the ceramic compound was added to Example 1 and Comparative Example 1, and to distinguish them, the terms "polymer solid electrolyte" and "composite solid electrolyte" were used, respectively.

## EXAMPLE

### Example 1: Preparation of polymer solid electrolyte

Step 1) Preparation of polymer containing copolymer

A polyethylene oxide (PEO)-based copolymer of the following Chemical Formula 1a was prepared:

[Chemical Formula 1a]

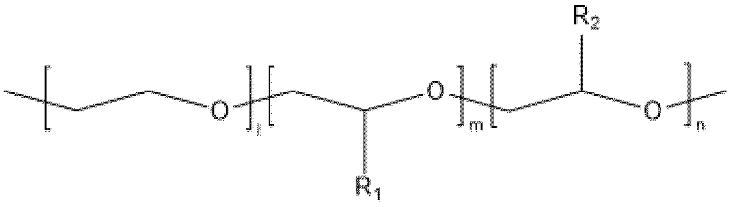

wherein, in Chemical Formula 1a, $R_1$ is $-CH_2-O-(CH_2-CH_2-O)_k-CH_3$, $R_2$is $-CH_2-O-CH_2-CH=CH_2$, k is 2, the ratio of l : m : n is 85:13:2, and the weight average molecular weight (Mw) of the copolymer is about 2,000,000 g/mol.

The copolymer of Chemical Formula 1a has an allyl group bonded through a methylene oxide linker as a crosslinkable functional group.

The polyethylene oxide copolymer was mixed with acetonitrile as a solvent, trimethylolpropane trimethacrylate as a crosslinking agent, benzoyl peroxide as an initiator, and LiTFSI as a lithium salt were mixed to prepare a polymer solution, which was then stirred using a magnetic bar for 24 hours. At this time, the polymer solution was composed of 20 parts by weight of trimethylolpropane trimethacrylate as a crosslinking agent, 1 part by weight of benzoyl peroxide as an initiator, and 36.5 parts by weight of lithium salt based on 100 parts by weight of polyethylene oxide copolymer, wherein an acetonitrile solvent was used so that the concentration of polyethylene oxide copolymer, which is a polymer contained in the polymer solution, was 10.4%.

The prepared polymer solution was solution-cast on a coin cell lower substrate, then primarily dried at room temperature for 12 hours, and then secondarily dried at 100°C for 12 hours to induce a crosslinking bond, thereby preparing an electrolyte film with a thickness of 200 $\mu$m.

Step 2) Preparation of polymer solid electrolyte

The polymer was attached to the upper plate of the chamber, the lower part of the chamber was filled with EMC solvent, and then naturally evaporated at room temperature for 72 hours to allow ethylmethyl carbonate(EMC) vapor to flow into the polymer attached to the upper part of the chamber. Thereby, a polymer solid electrolyte was prepared.

**Example 2: Preparation of composite solid electrolyte**

A composite solid electrolyte was prepared in the same manner as in Example 1, except that in step 1) of Example 1, based on 100 parts by weight of the polyethylene oxide copolymer, 20 parts by weight of trimethylolpropane trimethacrylate as a crosslinking agent, 1 part by weight of benzoyl peroxide as an initiator, 36 parts by weight of lithium salt, and 40 parts by weight of LSTP as a ceramic compound were mixed to prepare a mixed solution, wherein an acetonitrile solvent was used so that the concentration of the polymer polyethylene oxide copolymer contained in the mixed solution was 11.1%, and the concentration of the polymer polyethylene oxide copolymer and the ceramic compound was 14.9%.

**COMPARATIVE EXAMPLE**

**Comparative Example 1: Polymer solid electrolyte containing modified PEO + large amount of liquid**

A polymer solid electrolyte was prepared in the same manner as in Example 1, except that the EMC solvent was directly injected into the polymer solid electrolyte prepared in step 1) of Example 1.

**Comparative Example 2: Composite solid electrolyte containing modified PEO + large amount of liquid**

A composite solid electrolyte was prepared in the same manner as in Example 2, except that the EMC solvent was directly injected into the composite solid electrolyte prepared in step 1) of Example 2.

## EXPERIMENTAL EXAMPLE

### Experimental Example 1: Confirmation of correlation between polar compound content and polar solvent diffusion behavior

The content (M(t)) of the polar compound measured using the fitting parameters K and n was fitted according to the following Equation 1, and the correlation between the polar solvent diffusion behavior and the ionic conductivity was confirmed.

<Equation 1>

$$M(t) = Kt^{n}$$

wherein, in Equation 1,

- M(t) is the content of the polar compound contained on the surface or inside the polymer chain after the polar solvent is vapor-deposited and diffused, depending on the vapor deposition time,
- t is the vapor deposition time,
- K is the empirical rate coefficient, which is a fitting parameter for fitting the content (M(t)) of the polar compound, $0.01 < K < 0.1$, and
- n is the transport exponent, which is a fitting parameter for fitting the content (M(t)) of the polar compound, and is $0.5 \leq n < 0.7$.

In Equation 1, the content (M(t)) of the polar compound can be measured by monitoring the weight of the liquid phase that evaporates over time while heating the solid electrolyte sample using a balance. For example, the content can be measured by monitoring the weight of the liquid that evaporates over time while heating the sample at a temperature of 55 to 70°C or 60°C using a heated electronic balance (AND MS-70). When the amount of the polar compound that evaporates over time reaches the state of saturation, the saturation amount at that time was regarded as the total amount of the polar compound contained inside the solid electrolyte. In Examples and Comparative Examples, the polar compound may be ethylmethyl carbonate (EMC).

According to Equation 1, a graph was realized for the correlation with the amount of change ($\Delta$M(t)) in the content (M(t)) of the polar compound measured above while the vapor deposition times (t) being between 0 sec and 500 sec (Figures 1 to 2), whereby the fitting parameters K and n, representing the behavior of the polar solvent, were determined.

Figure 1 is a graph showing the diffusion behavior of a polar solvent within a polymer and the change in the content of the deposited polar compound according to vapor deposition time during the solvent vapor deposition process according to Example 1. Figure 2 is a graph showing the diffusion behavior of a polar solvent within a polymer and the change in the content of the impregnated polar compound according to impregnation time during the solvent impregnation process according to Comparative Example 1.

Referring to Figures 1 and 2, both Example 1 and Comparative Example 1 correspond to the graph of the function of Equation 1, but the diffusion behavior of the polar solvent vapor deposited on the polymer as in Example 1 is similar to Fickian diffusion, and the diffusion behavior of the polar solvent impregnated with the polymer as in Comparative Example 1 is similar to Non-Fickian diffusion, and thus, it can be predicted that gelation will occur.

While fitting the graphs of FIGS. 1 and 2, the fitting parameters K and n were obtained, and the results are shown in Table 1 below.

Further, the ionic conductivity was determined by the following method.

To measure the ionic conductivity of the polymer solid electrolyte prepared in Examples and Comparative Examples, the polymer solid electrolyte was formed on the lower substrate of a coin cell with a size of 1.7671 $cm^2$, and then a coin cell for measuring the ionic conductivity was fabricated using SUS as a blocking electrode.

Resistance was measured using an electrochemical impedance spectrometer (EIS, VM3, Bio Logic Science Instrument) at 25°C under the conditions of an amplitude of 10 mV and a scan range from 1Hz to 0.1 MHz, and then the ionic conductivity of the polymer solid electrolyte was calculated according to the following Equation 2.

<Equation 2>

$$\sigma_i = \frac{L}{RA}$$

wherein, in Equation 2, $\sigma_{i,0}$ is the ionic conductivity (S/cm) of the polymer solid electrolyte, R is the resistance($\Omega$) of the polymer solid electrolyte measured with the electrochemical impedance spectrometer, L is the thickness ($\mu$m)of the polymer solid electrolyte, and A means the area($cm^2$) of the polymer solid electrolyte. The polymer solid electrolyte samplehad L = 200 $\mu$m and A = 1.7671$cm^2$.

[Table 1]

| | Example 1 | Comparative Example 1 |
|---|---|---|
| Types of solid electrolyte | Polymer solid electrolyte | Polymer solid electrolyte |
| Preparation method | Solvent vapor deposition method | Solvent impregnation method |
| EMC content relative to total weight of solid electrolyte (wt.%) | 1.2 | 12 |
| K | 0.0451 | 0.5 |
| n | 0.112 | 0.72 |
| $\sigma_{i,0}$ (mS/cm) | 0.51 | 0.045 |

As shown in Table 1, when comparing Example 1 and Comparative Example 1, which are polymer solid electrolytes, it was confirmed that in Example 1 in which the vapor deposition process was carried out, $\sigma_{i,0}$ was significantly higher than in Comparative Example 1 in which the solvent impregnation method was carried out.

**Claims**

**1.** A method for preparing a polymer solid electrolyte, the method comprising the steps of:

(S1) preparing a polymer in which a PEO(polyethylene oxide)-based copolymer containing a crosslinkable functional group is crosslinked; and
(S2) vapor-depositing a polar solvent onto the polymer prepared in step (S1),
wherein the vapor deposition step is carried out for a period of time that satisfies the following Equation 1, thereby adjusting the content of a polar compound in the polymer solid electrolyte:

<Equation 1>

$$M(t) = Kt^n$$

wherein, in Equation 1,
M(t) is the content of the polar compound contained on the surface or inside the polymer chain after the polar solvent is vapor-deposited and diffused, depending on the vapor deposition time,
t is the vapor deposition time,
K is the empirical rate coefficient, which is a fitting parameter for fitting the content (M(t)) of the polar compound, $0.01 < K < 0.1$, and
n is the transport exponent, which is a fitting parameter for fitting the content (M(t)) of the polar compound, and is $0.5 \leq n < 0.7$.

**2.** The method for preparing a polymer solid electrolyte according to claim 1, wherein step (S1) is carried out in the presence of one or more additives selected from the group consisting of a crosslinking agent and an initiator.

**3.** The method for preparing a polymer solid electrolyte according to claim 1, wherein a lithium salt is further added at step (S1) or before step (S1).

**4.** The method for preparing a polymer solid electrolyte according to claim 1, wherein a ceramic compound is further added during crosslinking in step (S1).

**5.** The method for preparing a polymer solid electrolyte according to claim 1, wherein the crosslinkable functional group is bonded to the PEO-based copolymer through an alkylene linker or alkylene oxide linker having 0 to 10 carbon atoms, provided that an alkylene linker having 0 carbon atoms represents a single bond, and is selected from the group consisting of a hydroxyl group, a carboxyl group, an isocyanate group, a nitro group, a cyano group, an amine group, an amide group, an epoxy group and an allyl group.

**6.** The method for preparing a polymer solid electrolyte according to claim 1, wherein:

the PEO (polyethylene oxide)-based copolymer is a copolymer containing repeating units of the following Chemical Formulas 1 to 3:

[Chemical Formula 1]

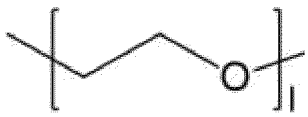

[Chemical Formula 2]

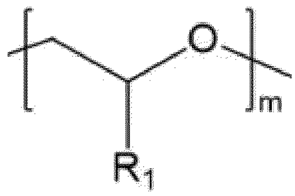

[Chemical Formula 3]

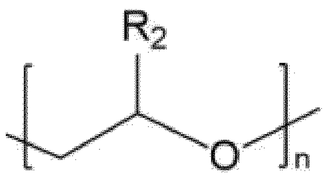

wherein, in Chemical Formulas 1 to 3, $R_1$ represents $-CH_2-O-(CH_2-CH_2-O)_k-R_3$, k is 0 to 20, $R_3$ represents an alkyl group having 1 to 5 carbon atoms,

$R_2$ represents a substituent in which one or more crosslinkable functional groups selected from the group consisting of a hydroxyl group, a carboxyl group, an isocyanate group, a nitro group, a cyano group, an amine group, an amide group, an epoxy group and an allyl group are bonded to a polymer chain via an alkylene linker or alkylene oxide linker having 0 to 10 carbon atoms, provided that an alkylene linker having 0 carbon atoms represents a single bond, and

l, m and n are the number of repetitions of the repeating unit, wherein l and n are each independently an integer of 1 to 1000, and m is an integer of 0 to 1000.

**7.** The method for preparing a polymer solid electrolyte according to claim 1, wherein in step (S2), a vapor of the polar solvent is deposited onto the polymer so that the content of the polar solvent is 0.1% by weight or more and less than 10% by weight, based on the total weight of the polymer solid electrolyte.

8. The method for preparing a polymer solid electrolyte according to claim 1, wherein the polar solvent comprises at least one selected from the group consisting of a carbonate-based solvent and a sulfonyl-based solvent.

9. The method for preparing a polymer solid electrolyte according to claim 1, wherein the polar solvent comprises at least one selected from the group consisting of ethyl methyl carbonate(EMC), dimethyl carbonate(DMC), diethyl carbonate(DEC), ethylene carbonate(EC), propylene carbonate(PC), vinylene carbonate(VC) and Sulfolane.

【Figure 1】

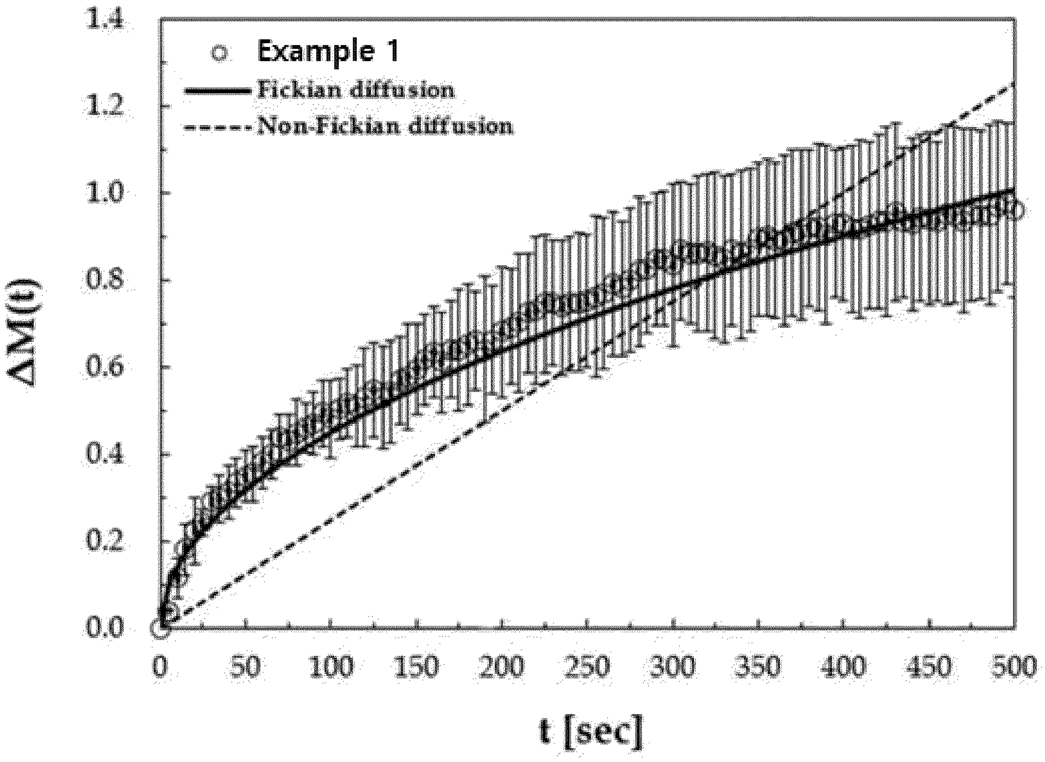
Example 1
Fickian diffusion
Non-Fickian diffusion
ΔM(t)
t [sec]
1.4
1.2
1.0
0.8
0.6
0.4
0.2
0.0
0
50
100
150
200
250
300
350
400
450
500

【도 2】

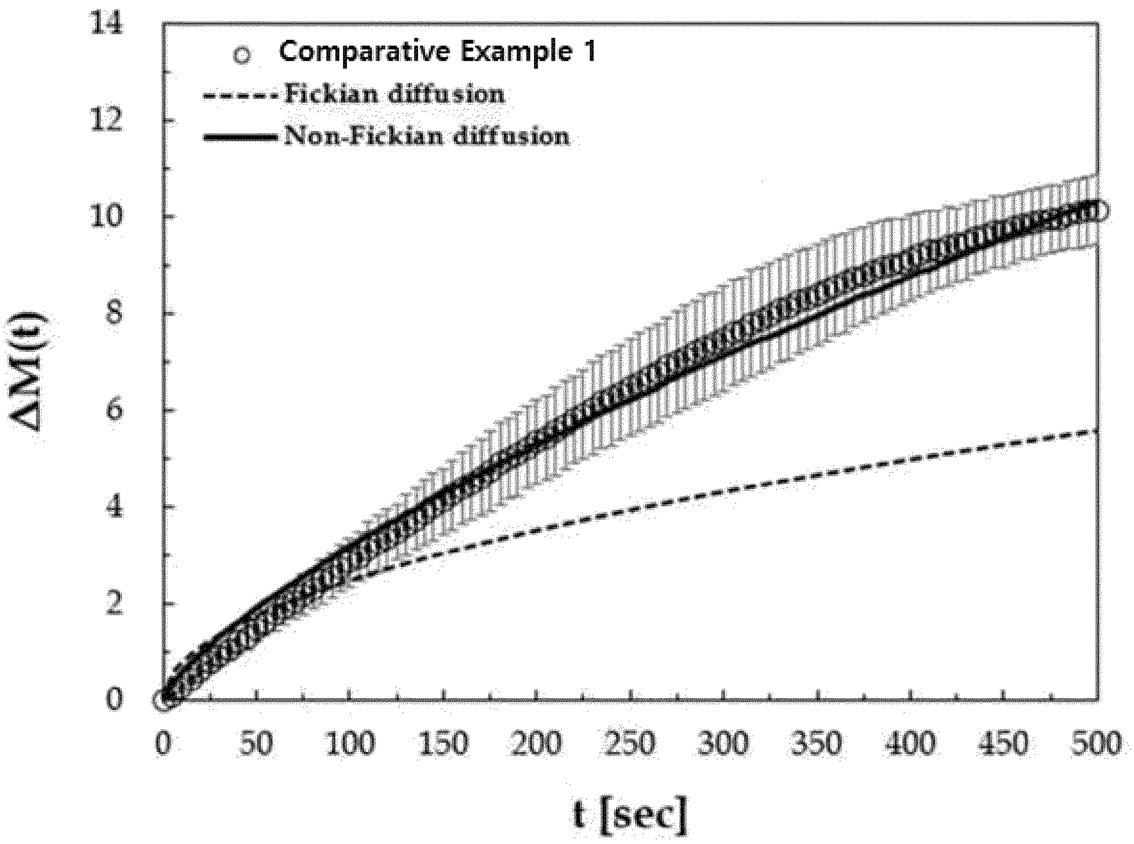
Comparative Example 1
Fickian diffusion
Non-Fickian diffusion
ΔM(t)
t [sec]
0
2
4
6
8
10
12
14
0
50
100
150
200
250
300
350
400
450
500

**INTERNATIONAL SEARCH REPORT**

International application No.
**PCT/KR2023/015790**

**A. CLASSIFICATION OF SUBJECT MATTER**

**H01M 10/0565**(2010.01)i; **H01M 10/052**(2010.01)i; **C08G 65/24**(2006.01)i; **C08L 71/02**(2006.01)i; **C08K 3/013**(2018.01)i; **C08J 5/22**(2006.01)i

According to International Patent Classification (IPC) or to both national classification and IPC

**B. FIELDS SEARCHED**

Minimum documentation searched (classification system followed by classification symbols)

H01M 10/0565(2010.01); H01B 1/06(2006.01); H01M 10/052(2010.01); H01M 10/0525(2010.01); H01M 10/056(2010.01); H01M 10/058(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 복합 고체 전해질(composite solid electrolyte), 가교 결합성 작용기(crosslinkable functional group), 폴리에틸렌 옥사이드계 코폴리머(polyethylene oxide-based copolymer), 세라믹 화합물(ceramic compound), 극성 화합물(polar compound), 기상 증착(vapor deposition), 전고체 전지(all solid state battery)

**C. DOCUMENTS CONSIDERED TO BE RELEVANT**

| Category* | Citation of document, with indication, where appropriate, of the relevant passages | Relevant to claim No. |
|---|---|---|
| Y | CN 113273010 A (OSAKA SODA CO., LTD.) 17 August 2021 (2021-08-17)<br>See claims 1-6; and paragraphs [0015]-[0024], [0026], [0031], [0035], [0042], [0043], [0049], [0051], [0054], [0056], [0065], [0070], [0098]-[0100] and [0105]. | 1-9 |
| Y | CN 111834667 A (SHENZHEN CAPCHEM TECHNOLOGY CO., LTD.) 27 October 2020 (2020-10-27)<br>See claims 1-10; paragraphs [0003], [0004], [0014], [0032], [0042], [0055]-[0062], [0068] and [0071]; example 2; and figure 1. | 1-9 |
| A | US 2003-0082457 A1 (NOH, H.-G.) 01 May 2003 (2003-05-01)<br>See claims 1, 6-13 and 19. | 1-9 |
| A | KR 10-2017-0113417 A (LG CHEM, LTD.) 12 October 2017 (2017-10-12)<br>See entire document. | 1-9 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 January 2024** | **22 January 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

INTERNATIONAL SEARCH REPORT

International application No.
**PCT/KR2023/015790**

**C. DOCUMENTS CONSIDERED TO BE RELEVANT**

| Category* | Citation of document, with indication, where appropriate, of the relevant passages | Relevant to claim No. |
| --- | --- | --- |
| A | KR 10-2277064 B1 (LINTEC CORPORATION) 13 July 2021 (2021-07-13) See entire document. | 1-9 |

Form PCT/ISA/210 (second sheet) (July 2022)

**INTERNATIONAL SEARCH REPORT**
**Information on patent family members**

International application No.
**PCT/KR2023/015790**

| Patent document cited in search report | Publication date (day/month/year) | Patent family member(s) | Publication date (day/month/year) |
|---|---|---|---|
| CN 113273010 A | 17 August 2021 | WO 2020-110994 A1 | 04 June 2020 |
| CN 111834667 A | 27 October 2020 | None | |
| US 2003-0082457 A1 | 01 May 2003 | CN 100375329 C | 12 March 2008 |
| | | CN 100528931 C | 19 August 2009 |
| | | CN 1332486 A | 23 January 2002 |
| | | CN 1341675 A | 27 March 2002 |
| | | JP 2002-025621 A | 25 January 2002 |
| | | JP 2002-025622 A | 25 January 2002 |
| | | JP 4266083 B2 | 20 May 2009 |
| | | JP 4418126 B2 | 17 February 2010 |
| | | KR 10-0337889 B1 | 24 May 2002 |
| | | KR 10-0357960 B1 | 25 October 2002 |
| | | KR 10-2001-0105584 A | 29 November 2001 |
| | | KR 10-2002-0003901 A | 16 January 2002 |
| | | US 2002-0018937 A1 | 14 February 2002 |
| | | US 6632571 B2 | 14 October 2003 |
| | | US 6780544 B2 | 24 August 2004 |
| KR 10-2017-0113417 A | 12 October 2017 | CN 108140883 A | 08 June 2018 |
| | | CN 108140883 B | 29 January 2021 |
| | | EP 3333959 A1 | 13 June 2018 |
| | | EP 3333959 B1 | 29 April 2020 |
| | | KR 10-2018755 B1 | 06 September 2019 |
| | | US 10892519 B2 | 12 January 2021 |
| | | US 2018-0254523 A1 | 06 September 2018 |
| | | WO 2017-171436 A1 | 05 October 2017 |
| KR 10-2277064 B1 | 13 July 2021 | CN 106063018 A | 26 October 2016 |
| | | CN 106063018 B | 28 September 2018 |
| | | CN 106133480 A | 16 November 2016 |
| | | CN 106133480 B | 29 May 2018 |
| | | EP 3114765 A1 | 11 January 2017 |
| | | EP 3114765 B1 | 13 June 2018 |
| | | JP 2015-171222 A | 28 September 2015 |
| | | JP 6244989 B2 | 13 December 2017 |
| | | JP 6557214 B2 | 07 August 2019 |
| | | KR 10-1826461 B1 | 06 February 2018 |
| | | KR 10-2016-0130782 A | 14 November 2016 |
| | | TW 201542362 A | 16 November 2015 |
| | | TW I647100 B | 11 January 2019 |
| | | US 10122045 B2 | 06 November 2018 |
| | | US 2016-0365815 A1 | 15 December 2016 |
| | | US 2017-0069933 A1 | 09 March 2017 |
| | | US 9882242 B2 | 30 January 2018 |
| | | WO 2015-133388 A1 | 11 September 2015 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220132780
- KR 1020230136067
- JP 6124713 A